**Europäisches Patentamt**

**European Patent Office**

**Office européen des brevets**

(19)

(11) Veröffentlichungsnummer: **0 174 538**
**B1**

(12) **EUROPÄISCHE PATENTSCHRIFT**

(45) Veröffentlichungstag der Patentschrift:
**17.11.88**

(51) Int. Cl.⁴: **H 02 M 3/156**

(21) Anmeldenummer: **85110583.3**

(22) Anmeldetag: **22.08.85**

(54) Schaltregler mit einer Regelstrecke und parallel dazu angeordnete Hilfsregelstrecke.

(30) Priorität: **28.08.84 DE 3431613**

(43) Veröffentlichungstag der Anmeldung:
**19.03.86 Patentblatt 86/12**

(45) Bekanntmachung des Hinweises auf die Patenterteilung:
**17.11.88 Patentblatt 88/46**

(84) Benannte Vertragsstaaten:
**CH DE FR GB IT LI NL SE**

(56) Entgegenhaltungen:
**WO - A - 84/00085**
**DE - A - 2 625 036**
**US - A - 3 226 630**

**IBM TECHNICAL DISCLOSURE BULLETIN, Band 20, Nr. 8, Januar 1978, Seiten 2945-2947, New York, US; R.A. SCHULZ: "Power control technique"**

(73) Patentinhaber: **Siemens Aktiengesellschaft Berlin und München, Wittelsbacherplatz 2, D-8000 München 2 (DE)**

(72) Erfinder: **Panse, Hubert, Dipl.-Ing., Kleinstrasse 52, D-8000 München 70 (DE)**

## Beschreibung

Die Erfindung betrifft einen Schaltregler gemäss dem Oberbegriff des Patentanspruches 1.

Schaltregler sind bei Stromversorgungen zur Erzeugung einer konstanten Ausgangsspannung allgemein bekannt. Hierbei wird über einen Schalttransistor eine aus einer Induktivität und einem Kondensator bestehende Regelstrecke impulsartig direkt (Sekundärschaltregler), oder über einen Übertrager und eine Gleichrichterdiode (Durchflusswandler) mit einem Strom beaufschlagt. Die Regelstrecke dient zur Glättung der impulsartig angelegten Spannung. Ein Regelkreis enthält diese Regelstrecke, einen Verstärker zur Verstärkung der Differenz zwischen der vom Sekundärschaltregler abgegebenen Spannung und einer vorgegebenen Referenzspannung. Weiter enthält sie einen Schalttransistor und einen Pulsbreitenmodulator zur Steuerung des Tastverhältnisses des Schalttransistors. Hiermit wird die Ausgangsspannung auf einen konstanten Wert geregelt. Ein Übertrager ändert die Phasenbeziehung nicht, sondern nur die Spannungs-, und Stromverhältnisse.

Die aus der Induktivität und dem Kondensator bestehende Regelstrecke stellt eine Verzögerungsschaltung zweiter Ordnung für die vom nichtstetigen Stellglied, d.h. vom Schalttransistor modulierte Gleichspannung dar. Wenn eine sehr geringe Welligkeit der Ausgangsspannung im Schaltfrequenzbereich gefordert ist, so muss diese Verzögerung eine sehr hohe Dämpfung besitzen. Daraus resultiert eine niedrigere Resonanzfrequenz dieser Anordnung, die nahe an die Störfrequenz der Netzwechselspannung kommt. Bei Verwendung von Proportionalreglern im Regelkreis ist somit die Resonanzfrequenz des geschlossenen Regelkreises in der Nähe der Resonanzfrequenz der Regelstrecke, da hier die Phasendrehung des geschlossenen Kreises kleiner als 180° ist. Bei der Resonanzfrequenz des geschlossenen Regelkreises ist die Kreisverstärkung gleich Eins. Damit ist im Störfrequenzbereich, d.h. in der Nähe der Resonanzfrequenz der Regelstrecke die Kreisverstärkung aus Stabilitätsgründen sehr stark beschränkt und die Störgrösse, d.h. die gleichgerichtete Netzwechselspannung wird nur unvollkommen ausgeregelt.

Die Verwendung von Reglern mit Differentialanteilen im Regelkreis zur Erhöhung der Kreisverstärkung im Störfrequenzbereich ist bei geschalteten Stromversorgungen nur sehr begrenzt möglich, da sie u.a. auch Störungen, die von Schaltvorgängen herrühren derart verstärken, dass die Funktionssicherheit nicht gewährleistet ist.

Zur Regelung der Ausgangsspannung von geschalteten Stromversorgungen ist die Verwendung von stetigen Reglern bekannt. Diese weisen einen sehr geringen Wirkungsgrad auf. Weiter ist zur Regelung die Verwendung komplexer Regelkreisstrukturen bekannt, wie z.B. eine unterlagerte Stromregelung. Diese weist den Nachteil auf, dass ein erhöhter Bauelementeaufwand für die Strommessung und den Stromregler nötig ist. Es ist ebenfalls bekannt, durch einen erhöhten Aufwand Filterung der Netzspannungswelligkeit die Störgrösse für eine geregelte Ausgangsspannung zu reduzieren.

Aus der DE-OS 26 25 036 ist ein getaktetes Netzgerät mit einem Gleichrichter dessen Gleichstromausgang ein steuerbarer Schalter und ein mit einer Freilaufdiode überbrückter Tiefpass nachgeschaltet ist und einem Regelkreis, in dem die Ausgangsspannung des Tiefpasses die Regelgrösse ist und die Stellgrösse dem steuerbaren Schalter zugeführt ist, bekannt. Der Regelkreis ist dabei ein vermaschter Regelkreis, dem als Hilfsregelgrösse die Eingangsspannung des Tiefpasses zugeführt ist, so dass die Gesamtwirkung einem proportional-differentiellem Regler entspricht. Vorzugsweise ist im vermaschten Regelkreis einem Regler mit proportional-integralem Zeitverhalten, dem die Regelgrösse zugeführt ist, ein Regler mit proportionalem Zeitverhalten unterlagert, dem die Hilfsregelgrösse über ein Glättungsglied zugeleitet ist; oder der vermaschte Regelkreis ist mit einem Regler mit proportionalem Zeitverhalten und einem unterlagerten Regler mit integralem Zeitverhalten realisiert, wobei dem Regler mit proportionalem Zeitverhalten die Regelgrösse und dem Regler mit integralem Zeitverhalten die Hilfsregelgrösse zugeführt ist.

Es ist Aufgabe der Erfindung, einen Schaltregler mit einer Regelstrecke und mit einer Hilfsregelstrecke anzugeben, die mit einfachen Mitteln eine hohe Verstärkung auch im Eigenfrequenzbereich der Hilfsstrecke erlaubt und dadurch auch niederfrequente, z.B. von der Netzwechselspannung herrührende Störgrössen ausregelt.

Diese Aufgabe wird erfindungsgemäss durch die im kennzeichnenden Teil des Patentanspruches 1 angegebenen Merkmale gelöst.

Vorteilhafte Ausführungsformen der Erfindung sind in den abhängigen Ansprüchen gekennzeichnet.

Die Erfindung löst für Stromversorgungen mit Schaltreglern das Problem der grossen Phasendrehung der Regelstrecke im Eigenfrequenzbereich des Regelkreises. Dazu wird, vom Regler aus gesehen, parallel zur Regelstrecke eine Hilfsregelstrecke geschaltet, die im gewünschten Frequenzbereich eine geringe Phasendrehung von z.B. −90° besitzt. Damit lässt sich die Verstärkung erhöhen ohne die Stabilität zu gefährden.

Durch die Verstärkungserhöhung wird die Störgrösse z.B. die Netzspannungswelligkeit wesentlich besser ausgeregelt. Die Hilfsregelstrecke besitzt neben dem Tiefpass erster Ordnung für die Phasendrehung von −90° noch ein Hochpassverhalten, damit die stationäre Ausgangsgrösse der Regelstrecke unbeeinflusst bleibt.

Im folgenden wird die Erfindung anhand von in den Zeichnungen dargestellten Ausführungsbeispielen beschrieben. Dabei zeigt

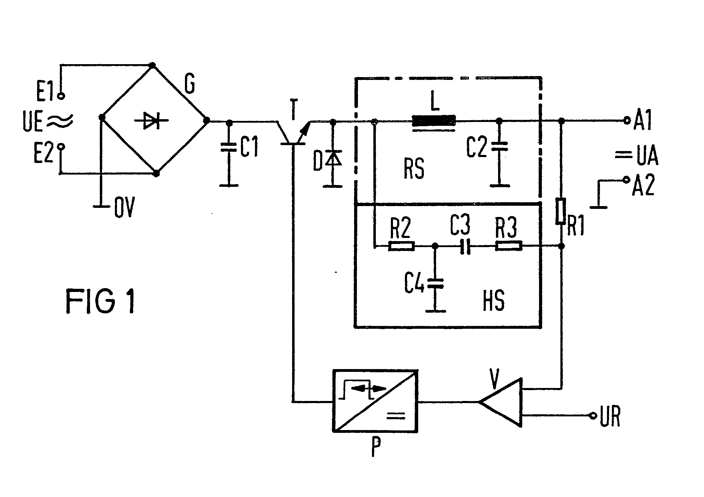

Fig. 1 einen Sekundärschaltregler und

Fig. 2 einen Durchflussumrichter.

In der Figur ist ein an sich bekannter Sekundärschaltregler mit einem Schalttransistor T dargestellt. Am Kollektor des Schalttransistor T liegt eine über eine Gleichrichteranordnung G aus einer Eingangswechselspannung UE erzeugte, und von einem Kondensator CI geglättete ungeregelte Gleichspannung an. Die Eingangswechselspannung UE ist an Eingangsklemmen E1, E2 angeschaltet. Die ungeregelte Gleichspannung und eine Ausgangsgleichspannung UA sind jeweils auf ein Bezugspotential OV bezogen. Der Emitter des Schalttransistors T, der über eine Freilaufdiode D mit dem Bezugspotential OV verbunden ist, ist über eine Regelstrecke RS mit einer Ausgangsklemme A1 verbunden. Die Regelstrecke RS besteht aus einer Induktivität L und einem Kondensator C2. Die Ausgangsgleichspannung UA ist an Ausgangsklemmen A1, A2 abgreifbar, wobei die Ausgangsklemme A2 mit dem Bezugspotential OV verbunden ist. Die Ausgangsklemme A1 ist über einen Widerstand R1 mit einem Eingang eines Verstärkers verbunden, an dessen anderen Eingang eine Referenzspannung UR anliegt. Der Ausgang des Verstärkers ist am Gleichspannungseingang eines Pulsbreitenmodulators P angeschaltet. Der Ausgang des Pulsbreitenmodulators P ist an der Basis des Schalttransistors T angeschaltet.

Erfindungsgemäss vorgesehen ist eine Hilfsregelstrecke HS. Der der Erfindung zugrundeliegende Gedanke ist dabei, dass der Regelstrecke RS eine Hilfsregelstrecke HS parallel geschaltet ist, die im gewünschten Frequenzbereich eine geringe Phasendrehung, d.h. beispielsweise eine Phasendrehung von −90° besitzt. Damit lässt sich die Verstärkung im Regelkreis erhöhen, ohne die Stabilität zu beeinträchtigen.

Die Hilfsregelstrecke HS besteht aus einer Verzögerungsschaltung erster Ordnung, d.h. einer zwischen den Emitter des Schalttransistors T und das Bezugspotential OV geschalteten Serienschaltung aus einem Widerstand R2 und einem Kondensator C4. Der nicht näher bezeichnete Schaltungspunkt zwischen dem Widerstand R2 und dem Kondensator C4 ist über einen weiteren Kondensator C3, der zur Gleichspannungsabtrennung dient, und einen Widerstand R3 ebenfalls mit dem einen Eingang des Verstärkers V verbunden.

Erfindungsgemäss ist die Verzögerung, d.h. das Produkt aus dem Widerstand R2 und dem Kondensator C4 der Hilfsregelstrecke HS derart dimensioniert, dass der reziproke Wert in etwa gleich ist der Resonanzfrequenz der Regelstrecke RS. Hin zu hohen Frequenzen überwiegt bei der Parallelschaltung aus der Regelstrecke RS und der Hilfsregelstrecke HS der Frequenzgang der Hilfsregelstrecke HS. Somit ist bei hohen Frequenzen eine maximale Phasendrehung von −90° gewährleistet und damit die Schwingungsneigung des Regelkreises vermieden. Hin zu niedrigen Frequenzen überwiegt hierbei der Frequenzgang der Regelstrecke RS. Hierbei dient der Kondensator C3 zur Entkopplung des einen Eingangs des Verstärkers V vom am Emitter des Schalttransistors T abgreifbaren Gleichspannungspotentials.

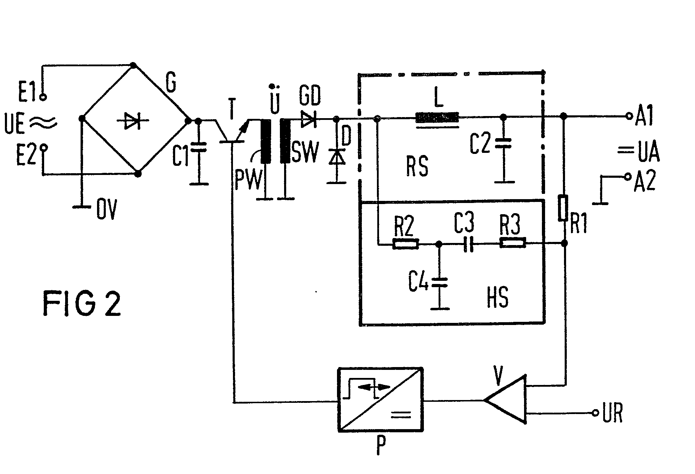

Die Erfindung ist auch bei primär geschalteten Schaltreglern anwendbar. Hierbei ist wie in Fig. 2 dargestellt, zwischen den Schalttransistoren T und die Diode D bzw. die Induktivität L ein Übertrager Ü mit einer Primär- und einer Sekundärwicklung PW, SW und einer Gleichrichterdiode G geschaltet. Die Diode D ist hierbei die notwendige Freilaufdiode. Die Die beiden Wicklungen PW, SW sind mit ihren freien Enden jeweils mit dem Bezugspotential OV verbunden.

Die Erfindung, die Parallelschaltung einer Hilfsregelstrecke mit einer maximalen Phasendrehung von −90° zu einer Regelstrecke RS ist auf alle primär oder sekundär getakteten Durchflussschaltregler anwendbar.

## Patentansprüche

1. Schaltregler mit einer als Tiefpass ausgebildeten und aus einer Induktivität (L) und einem Glättungskondensator (C2) bestehenden Regelstrecke (RS), wobei ein am Glättungskondensator (C2) abgreifbares Gleichspannungspotential an einem Verstärker (V) anliegt, der zur Verstärkung der Differenz aus diesem Potential und einer vorgegebenen Referenzspannung (UR) dient, und mit einem nachgeschalteten Pulsbreitenmodulator (P) zur Steuerung eines Schalttransistors (T), sowie einer der Regelstrecke (RS) parallelgeschalteten Hilfsregelstrecke (HS) mit einer Verzögerungsschaltung 1. Ordnung dadurch gekennzeichnet dass die Verzögerungsschaltung eine zwischen dem Emitter des Schalttransistors (T) und einem Bezugspotential (OV) geschaltete Serienschaltung aus einem Widerstand (R2) und einem Kondensator C4) enthält, welche derart dimensioniert sind, dass der reziproke Wert des Produktes aus Widerstandswert (R2) und Kapazität des Kondensators (C4) in etwa gleich der Resonanzfrequenz der Regelstrecke (RS) ist.

2. Schaltregler nach Anspruch 1, dadurch gekennzeichnet, dass die Hilfsregelstrecke (HS) einen Spannungsteilerpunkt aufweist, an dem über einen weiteren Kondensator (C3) zur Gleichspannungsabtrennung ein Spannungspotential abgreifbar ist, das an einen Eingang des Verstärkers (V) geführt ist.

3. Schaltregler nach einem der Ansprüche 1 oder 2, dadurch gekennzeichnet, dass das Gleichspannungspotential am Ausgang des Schaltreglers über einen Widerstand (R1) und das Spannungspotential über einen Widerstand (R3) am Verstärker (V) anliegt.

## Revendications

1. Régulateur de commutation comportant un système réglé (RS) constitué sous la forme d'un filtre passe-bas et formé par une inductance (L) et un condensateur de lissage (C2), et dans lequel un potentiel de tension continue pouvant être prélevé sur le condensateur de lissage (C2) est appliqué à un amplificateur (V) qui sert à amplifier la différence entre ce potentiel et une tension de référence prédéterminée (UR), et un modulateur d'impulsions en durée (P) branché en aval et servant à commander un transistor de commutation (T), ainsi qu'un système réglé auxiliaire (HS) branché en parallèle avec le système réglé (RS) et comportant un circuit de retardement du 1-er ordre, caractérisé par le fait que le circuit de retardement contient un circuit série branché entre l'émetteur du transistor de commutation (T) et un potentiel de référence (OV), et contentant une résistance (R2) et un condensateur (C4), qui sont dimensionnés de manière que l'inverse du produit de la valeur résistive (R2) par la capacité du condensateur (C4) soit approximativement égale à la fréquence de résonance du système réglé (RS).

2. Régulateur de commutation suivant la revendication 1, caractérisé par le fait que le système réglé auxiliaire (HS) possède un point de division de tension, au niveau duquel il est possible de prélever, par l'intermédiaire d'un autre condensateur (C3) servant à réaliser la séparation de la tension continue, un potentiel de tension qui est envoyé à une entrée de l'amplificateur (V).

3. Régulateur de commutation suivant l'une des revendications 1 ou 2, caractérisé par le fait que le potentiel de tension continue présent à la sortie du régulateur de commutation est appliqué par l'intermédiaire d'une résistance (R1) à l'amplificateur (V) et que le potentiel de tension est appliqué par l'intermédiaire d'une résistance (R3) à l'amplificateur (V).

**Claims**

1. A switched-mode regulator comprising a controlled system (RS) which is in the form of a low-pass filter, and consists of an inductance (L) and a smoothing capacitor (C2), where a d.c. voltage potential which can be tapped from the smoothing capacitor (C2) is connected to an amplifier (V) which serves to amplify the difference between this potential and a predetermined reference voltage (UR), and comprising a following pulse-width modulator (P) which controls a switching transistor (T), and an auxiliary controlled system (HS) which is connected in parallel to the controlled system (RS), and which consists of a delay circuit of the first order, characterised in that the delay circuit includes a series arrangement which is connected between the emitter of the switching transistor (T) and a reference potential (OV), and which consists of a resistor (R2) and a capacitor (C4) which are dimensioned to be such that the reciproca value of the product of the resistance value of the resistor (R2) and the capacitance of the capacitor (4) is approximately equal to the resonant frequency of the controlled system (RS).

2. A switched-mode regulator as claimed in Claim 1, characterised in that the auxiliary controlled system (HS) has a voltage divider point at which, via a further capacitor (C3) which isolates the d.c. voltage, a voltage potential can be tapped for supply to an input of the amplifier (V).

3. A switched-mode regulator as claimed in one of Claims 1 or 2, characterised in that the d.c. voltage potential at the output of the switched-mode regulator is connected via a resistor (R1) with the voltage potential via a resistor (R3) to the amplifier (V).

1/2

FIG 1

2/2

FIG 2